# FASCICULE DE BREVET EUROPEEN

(11) **EP 4 438 487 B1**
(45) Date de publication et mention de la délivrance du brevet: **14.05.2025**
(21) Numéro de dépôt: 24159662.6
(22) Date de dépôt: 26.02.2024
(51) Int. Cl.: B64D 29/02, B64D 37/30, B64D 37/32, B64D 37/20, B64D 27/12

(54) **AÉRONEF COMPORTANT UNE CANALISATION DE TRANSPORT DE DIHYDROGÈNE, UN CANAL D'ENFOUISSEMENT DE LADITE CANALISATION DE TRANSPORT ET UN SYSTÈME D'ÉVACUATION DE L'AIR ET DE L'EAU PRÉSENTE DANS LEDIT CANAL D'ENFOUISSEMENT**
FLUGZEUG MIT EINER DIWASSERSTOFFTRANSPORTLEITUNG, EINEM EINGRABENKANAL DIESER TRANSPORTLEITUNG UND EINEM SYSTEM ZUR LUFT- UND WASSERABFÜHRUNG IN DIESEM EINGRABENKANAL
AIRCRAFT COMPRISING A DIHYDROGEN TRANSPORT DUCT, A DUCT FOR BURYING SAID TRANSPORT DUCT AND A SYSTEM FOR EVACUATING AIR AND WATER PRESENT IN SAID DUCT

(30) Priorité: 29.03.2023 FR 2303001
(43) Date de publication de la demande: 02.10.2024
(73) Titulaire: AIRBUS OPERATIONS (S.A.S.), 31060 Toulouse (FR)
(72) Inventeur: MILLIERE, Jérôme, 31060 TOULOUSE (FR); CASTERAN, Marc, 31700 BLAGNAC (FR); JOUBERT, Romain, 31060 TOULOUSE (FR)
(74) Mandataire: Airbus-OPS SAS

(56) Documents cités:
- EP-A1- 4 056 477
- FR-A1- 3 100 799
- FR-A1- 3 127 203
- US-A1- 2015 246 731
- US-A1- 2017 267 368

## Description

### DOMAINE TECHNIQUE

La présente invention se rapporte au domaine des aéronefs et, en particulier, des aéronefs dont la source d'énergie est du dihydrogène liquide ou gazeux que ce soit pour alimenter une pile à combustible ou directement la chambre de combustion d'un moteur. La présente invention concerne ainsi un aéronef comportant une canalisation de transport de dihydrogène, un canal d'enfouissement qui permet le passage de la canalisation de transport et un système d'évacuation de l'eau et de l'air présents dans le canal d'enfouissement.

### ÉTAT DE LA TECHNIQUE ANTÉRIEURE

Il est connu d'utiliser le dihydrogène comme source d'énergie dans un aéronef. Le dihydrogène est stocké dans un réservoir et une canalisation de transport assure le transport du dihydrogène du réservoir vers le dispositif consommateur, comme par exemple une pile à combustible ou la chambre de combustion d'un moteur.

Pour sécuriser le transport du dihydrogène, il peut être utilisé pour chaque canalisation de transport, un canal d'enfouissement dans lequel la canalisation de transport est logée et fixée.

Le document FR3127203A1 montre un aéronef comportant:
- au moins une canalisation de transport dans laquelle s'écoule du dihydrogène, entre, en amont un réservoir et en aval un dispositif consommateur,
- pour chaque canalisation de transport, un canal d'enfouissement comportant un caniveau dans lequel est fixée la canalisation de transport et présentant une première extrémité par laquelle la canalisation de transport provenant de l'amont pénètre dans le caniveau et une deuxième extrémité par laquelle la canalisation de transport allant vers l'aval sort du caniveau, et un système d'évacuation fluidiquement connecté entre le caniveau et l'extérieur de l'aéronef, le système d'évacuation comportant une canalisation avec une extrémité proximale, une extrémité distale, la première canalisation étant fluidiquement connectée au caniveau par ladite extrémité proximale et débouchant à l'extérieur au niveau d'une paroi extérieure de l'aéronef par ladite extrémité distale.

Dans ce type d'installation, de l'eau peut être stagnée dans le canal d'enfouissement et il peut arriver que du dihydrogène s'échappe d'une canalisation de transport.

Il est donc souhaitable de prévoir une installation qui assure l'évacuation de l'eau et de l'air ou du dihydrogène présents dans le canal d'enfouissement vers l'extérieur.

### EXPOSÉ DE L'INVENTION

Un objet de la présente invention est de proposer un aéronef comportant une canalisation de transport de dihydrogène, un canal d'enfouissement qui permet le passage de la canalisation de transport et un système d'évacuation d'air et d'eau et de dihydrogène en cas de fuite.

À cet effet, est proposé un aéronef comportant :
- au moins une canalisation de transport dans laquelle s'écoule du dihydrogène, entre, en amont un réservoir et en aval un dispositif consommateur,
- pour chaque canalisation de transport, un canal d'enfouissement comportant un caniveau dans lequel est fixée la canalisation de transport et présentant une première extrémité par laquelle la canalisation de transport provenant de l'amont pénètre dans le caniveau et une deuxième extrémité par laquelle la canalisation de transport allant vers l'aval sort du caniveau, et
- pour chaque deuxième extrémité, un système d'évacuation fluidiquement connecté entre la deuxième extrémité du caniveau et l'extérieur de l'aéronef et destiné à assurer l'évacuation de l'air et de l'eau.

Selon l'invention, le système d'évacuation comporte une première canalisation avec une extrémité proximale, une extrémité distale et un coude entre ladite extrémité proximale et ladite extrémité distale, le coude constitue un point bas pour la première canalisation, et la première canalisation est fluidiquement connectée à la deuxième extrémité du caniveau par ladite extrémité proximale et débouche à l'extérieur au niveau d'une paroi extérieure de l'aéronef par ladite extrémité distale.

Selon l'invention, le système d'évacuation comporte une deuxième canalisation avec une extrémité proximale et une extrémité distale, la deuxième canalisation est fluidiquement connectée au coude par ladite extrémité proximale et débouche à l'extérieur de l'aéronef au niveau d'une paroi extérieure de l'aéronef par ladite extrémité distale, et entre l'extrémité proximale de la deuxième canalisation et l'extrémité distale de la deuxième canalisation, la deuxième canalisation présente une pente descendante.

Avec un tel arrangement, l'eau et l'air présents dans la canalisation de transport sont aspirés sur toute la longueur de ladite canalisation de transport. En effet, avec un tel arrangement, la circulation d'air dans la canalisation de transport est forcée, grâce à une pressurisation au niveau de la première extrémité de la canalisation de transport de manière à forcer l'air à circuler dans la canalisation de transport, et à l'aspiration résultante de l'air dans la canalisation de transport jusqu'à la deuxième extrémité de la canalisation de transport (créant une dépression). Ceci permet de maximiser une dilution de dihydrogène dans l'air en cas de fuite de dihydrogène.

Avantageusement, l'aéronef comporte une aile et l'extrémité distale de la première canalisation débouche sur l'extrados de l'aile.

Avantageusement, le système d'évacuation comporte un capot qui s'étend à l'extérieur de l'aéronef autour de l'extrémité distale en présentant une face fermée orientée vers l'avant de l'aéronef et une face ouverte orientée vers l'arrière de l'aéronef.

Avantageusement, le système d'évacuation comporte un élément chauffant disposé près de ladite deuxième canalisation.

Avantageusement, l'extrémité distale de la deuxième canalisation est orientée vers l'arrière de l'aéronef.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de dessus d'un aéronef selon l'invention,
Fig. 2 est une vue en coupe d'une aile de l'aéronef de la Fig. 1 selon la ligne II-II,
Fig. 3 est une vue en perspective d'un canal d'enfouissement selon l'invention,
Fig. 4 est une vue en perspective d'un exemple de canaux d'enfouissement et d'un système d'aération pouvant être mis en œuvre dans l'invention,
Fig. 5 est une vue en perspective d'un système d'évacuation d'air et d'eau selon l'invention,
Fig. 6 est une vue en coupe selon la ligne VI-VI du système d'évacuation de la Fig. 5, et
Fig. 7 est une vue en coupe selon la ligne VII-VII du système d'évacuation de la Fig. 5.

### EXPOSÉ DÉTAILLÉ DE MODES DE RÉALISATION

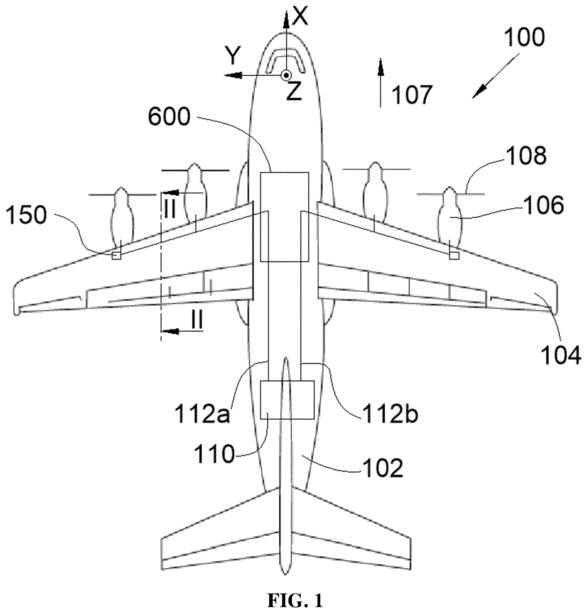

La Fig. 1 montre un aéronef 100 qui présente un fuselage 102 de part et d'autre duquel est fixée une aile 104. Sous chaque aile 104 est fixé au moins un système de propulsion 106.

Par convention, on appelle X la direction longitudinale de l'aéronef 100, Y la direction transversale de l'aéronef 100 qui est horizontale lorsque l'aéronef est au sol, et Z la direction verticale ou hauteur verticale lorsque l'aéronef est au sol, ces trois directions X, Y et Z étant orthogonales entre elles.

D'autre part, les termes " avant " et " arrière " sont à considérer par rapport à une direction d'avancement de l'aéronef 100 lors du fonctionnement des systèmes de propulsion 106, cette direction étant représentée schématiquement par la flèche 107.

Dans le mode de réalisation de l'invention présenté ici, chaque système de propulsion 106 comprend un moteur électrique, une hélice 108 montée sur l'arbre moteur dudit moteur électrique et une pile à combustible qui alimente le moteur en électricité.

La pile à combustible est alimentée en oxygène et en dihydrogène afin de produire de l'électricité.

Dans un autre mode de réalisation, le système de propulsion 106 peut prendre la forme d'un turboréacteur dont le carburant qui est brûlé dans la chambre de combustion est du dihydrogène. L'aéronef 100 comporte également un réservoir de dihydrogène 110 qui est disposé ici dans une partie arrière du fuselage, mais qui pourrait être disposé dans une autre partie de l'aéronef 100. Le dihydrogène peut être liquide ou gazeux.

Pour transporter le dihydrogène, l'aéronef 100 comporte au moins une canalisation de transport 112a-b dans laquelle s'écoule le dihydrogène, entre, en amont le réservoir 110 et en aval le dispositif consommateur 106 qui consomme le dihydrogène et qui peut être ici la pile à combustible ou le turboréacteur.

Pour des raisons de facilité de mise en œuvre, les canalisations de transport 112a-b sont préférentiellement disposées en partie haute de l'aéronef 100 et s'étendent ainsi le long du fuselage 102 et des ailes 104 en partie haute de ceux-ci.

Dans le mode de réalisation de l'invention présenté à la Fig. 1, il y a une canalisation de transport 112a qui s'étend et assure le transport du dihydrogène entre le réservoir 110 et un dispositif consommateur 106 à bâbord et il y a une canalisation de transport 112b qui s'étend et assure le transport du dihydrogène entre le réservoir 110 et un dispositif consommateur 106 à tribord.

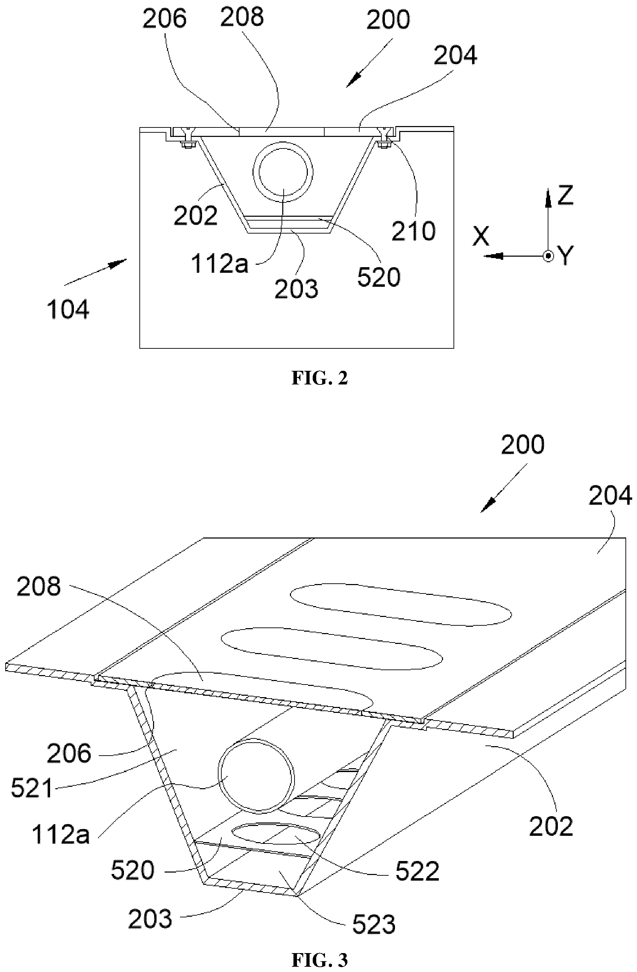

La Fig. 2 montre une coupe de l'aile 104 à bâbord avec la canalisation de transport 112a, mais l'invention s'applique de la même manière à tribord.

Dans le mode de réalisation représenté sur la Fig. 2, l'aéronef 100 comporte pour chaque canalisation de transport 112a, un canal d'enfouissement 200 comportant un caniveau 202 dans lequel est logée et fixée la canalisation de transport 112a.

La Fig. 3 montre le canal d'enfouissement 200 avec le caniveau 202 qui, dans le mode de réalisation de l'invention présenté sur les Figs. 2 et 3, comporte un fond 203, une ouverture à l'opposé du fond 203, et un couvercle 204 qui recouvre l'ouverture du caniveau 202 en l'obturant au moins en partie. La canalisation de transport 112a-b est ainsi logée entre le fond 203 et l'ouverture et ici le couvercle 204. La canalisation de transport 112a-b est fixée au caniveau 202 par tous moyens appropriés comme par exemple des colliers.

Dans le mode de réalisation de l'invention présenté sur les Figs. 2 et 3, le caniveau 202 présente une section trapézoïdale, mais des sections de forme différente sont possibles.

Le couvercle 204 constitue ici une paroi extérieure de l'aéronef 100, c'est-à-dire qu'elle est en contact direct avec l'air extérieur entourant l'aéronef 100. Le couvercle 204 est fixé à la paroi extérieure de l'aéronef 100 par tous moyens de fixation appropriés, comme par exemple ici des boulons 210.

Dans le mode de réalisation de l'invention présenté ici, le couvercle 204 est percé de fenêtres de ventilation 206 qui permettent le passage du dihydrogène, en particulier en cas de fuite de la canalisation de transport 112a-b, vers l'extérieur, limitant d'autant la concentration de dihydrogène dans le canal d'enfouissement 200 et les risques liés à la présence de dihydrogène.

Préférentiellement, le couvercle 204 est en position supérieure par rapport au fond 203, c'est-à-dire au-dessus.

Pour limiter l'impact des fenêtres de ventilation 206 sur la traînée de l'aéronef 100 en vol, chaque fenêtre de ventilation 206 est fermée par un bouchon 208 réalisé d'un matériau respirant pour le dihydrogène, c'est-à-dire que le bouchon 208 est imperméable pour l'eau extérieure qui ne peut pas pénétrer dans le canal d'enfouissement 200a-b, et perméable, entre autres pour le dihydrogène qui est présent dans le canal d'enfouissement 200a-b et peut s'évacuer vers l'extérieur. Le bouchon 208 est réalisé par exemple en polypropylène ou polyéthylène.

Dans le mode de réalisation de l'invention présenté ici, pour éviter qu'en cas d'incendie, le feu reste confiné dans le canal d'enfouissement 200 du fait de la présence des bouchons 208, chaque bouchon 208 est constitué d'un matériau susceptible de rompre sous l'effet de la chaleur, comme par exemple en polypropylène ou polyéthylène. En rompant sous l'effet de la chaleur, le bouchon 208 constitue un fusible qui permet d'ouvrir la fenêtre de ventilation 206 en cas de besoin pour souffler les flammes. En particulier, le matériau pour le bouchon 208 est choisi de manière à rompre lorsque la température à l'intérieur du caniveau 202 atteint une valeur inférieure à la température maximale acceptable par le caniveau 202 et la canalisation de transport 112a-b installée dans le caniveau 202, c'est-à-dire la température à partir de laquelle l'intégrité du caniveau 202 et de la canalisation de transport 112a-b n'est plus garantie.

En cas de surpression, il est également possible de prévoir que le couvercle 204 se rompe sous l'effet de la surpression limitant ainsi les risques de rupture du caniveau 202. À cette fin, la résistance au déchirement du couvercle 204 est inférieure à la résistance au déchirement du caniveau 202, par exemple par la réalisation de zones moins épaisses. Il est également possible de prévoir que la rupture s'effectue au niveau des moyens de fixation du couvercle 204, par exemple en utilisant des boulons fusibles qui rompent au-delà d'une certaine pression.

Pour aérer chaque canal d'enfouissement 200a-b, l'aéronef 100 comporte un système d'aération 600 qui est disposé ici au niveau de la partie supérieure de l'aéronef 100 au niveau de la jonction des ailes 104 et qui permet l'introduction de l'air extérieur et l'envoi de cet air dans chaque canal d'enfouissement 200.

Pour éviter que les attaches qui fixent la canalisation de transport 112a-b dans le canal d'enfouissement 200 perturbent l'écoulement de l'air provenant du système d'aération 600, le caniveau 202 comporte ici un plancher intermédiaire 520 entre le fond 203 et l'ouverture. Le plancher intermédiaire 520 est à distance du fond 203 et sépare le caniveau 202 en un caniveau supérieur 521 dans lequel est fixée la canalisation de transport 112a-b et un caniveau inférieur 523 dans lequel circule l'air provenant du système d'aération 600. Le caniveau supérieur 521 s'étend entre le plancher intermédiaire 520 et le couvercle 204, le caniveau inférieur 523 s'étend entre le fond 203 et le plancher intermédiaire 520.

Pour permettre le passage de l'air du caniveau inférieur 523 vers le caniveau supérieur 521, le plancher intermédiaire 520 est ajouré et il est ici percé de trous 522 qui permettent d'assurer une ventilation du caniveau supérieur 521.

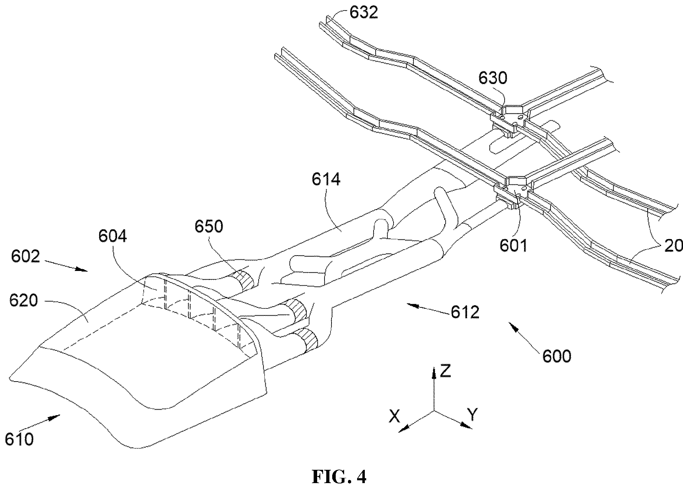

La Fig. 4 montre un exemple du système d'aération 600 avec les caniveaux 202 mais sans les canalisations de transport 112a-b qui logent dans lesdits caniveaux 202.

Le système d'aération 600 comporte une bouche d'aération 610 arrangée pour capter de l'air extérieur à l'aéronef 100 et au moins une canalisation d'apport 614 fluidiquement connectée à la bouche d'aération 610.

Dans le mode de réalisation de l'invention présenté à la Fig. 4, il y a une pluralité de canalisations d'apport 614 regroupées dans un réseau d'apport 612, et chaque canalisation d'apport 614 canalise l'air prélevé à l'extérieur au niveau de la bouche d'aération 610 vers un ou des caniveaux inférieurs 523 des caniveaux 202.

Dans le mode de réalisation de l'invention présenté ici, la bouche d'aération 610 peut prendre alternativement une position fermée et une position ouverte grâce à une trappe 620 qui est montée mobile entre une position fermée dans laquelle elle isole chaque fenêtre 604 de l'air extérieur et une position ouverte dans laquelle elle s'escamote pour laisser libre le passage de l'air extérieur vers chaque fenêtre 604. Le déplacement de la trappe 620 est assuré par tout système de déplacement connu de l'homme du métier comme par exemple un moteur ou un vérin hydraulique.

La bouche d'aération 610 comporte une entrée d'air 602 au niveau de laquelle débouche chaque canalisation d'apport 614 par une fenêtre 604 ouverte vers l'avant de l'aéronef 100 afin de capter l'air extérieur lorsque l'aéronef 100 avance ou est à l'arrêt.

Au niveau d'une intersection entre une canalisation d'apport 614 et un/des caniveaux inférieurs 523, pour assurer la distribution de l'air vers le ou chaque caniveau inférieur 523, l'aéronef 100 comporte ici une boîte de dérivation 601 qui assure la connexion fluidique entre la canalisation d'apport 614 et le ou chaque caniveau inférieur 523.

Ainsi, un flux d'air entrant dans la boîte de dérivation 601 va se diffuser au niveau du ou de chaque caniveau inférieur 523

Dans le mode de réalisation de l'invention présenté à la Fig. 4, pour aider à l'écoulement de l'air dans les canalisations d'apport 614, en particulier lorsque l'aéronef 100 est au sol, des ventilateurs 650 sont implantés dans une ou plusieurs des canalisations d'apport 614.

Chaque canal d'enfouissement 200 comporte ainsi une première extrémité 630 par laquelle la canalisation de transport 112a-b provenant de l'amont pénètre dans le caniveau 202 et une deuxième extrémité 632 par laquelle la canalisation de transport 112a-b allant vers l'aval sort du caniveau 202. La première extrémité 630 est donc la plus proche du réservoir 110 et la deuxième extrémité 632 est la plus proche du dispositif consommateur 106.

Pour chaque deuxième extrémité 632, l'aéronef 100 comporte un système d'évacuation 150 fluidiquement connecté entre la deuxième extrémité du caniveau 202, et plus particulièrement ici le caniveau inférieur 523 dudit caniveau 202, et l'extérieur de l'aéronef 100. Le système d'évacuation 150 qui est représenté schématiquement sur la Fig. 1 est destiné à assurer l'évacuation de l'air et de l'eau qui sont présents dans le caniveau 202, et plus particulièrement ici dans le caniveau inférieur 523 dudit caniveau 202 et plus généralement les gaz et les liquides présents dans le caniveau 202. Le système d'évacuation 150 est destiné à évacuer une partie seulement de l'air présent dans le caniveau 202. Ce système d'évacuation 150 est destiné à maximiser l'écoulement de l'air entre les première et deuxième extrémités 630, 632 du canal d'enfouissement 200, afin de diluer au maximum les fuites éventuelles de dihydrogène.

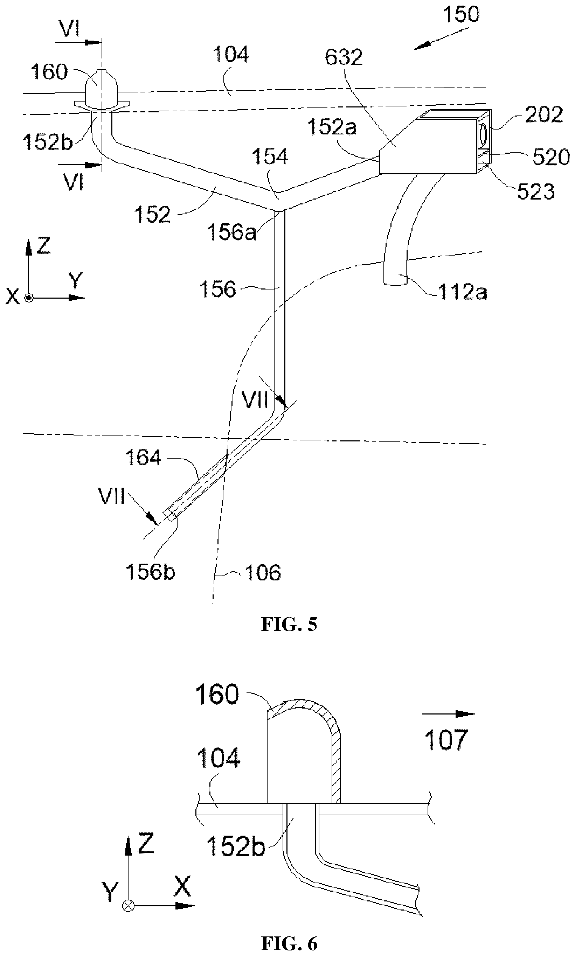

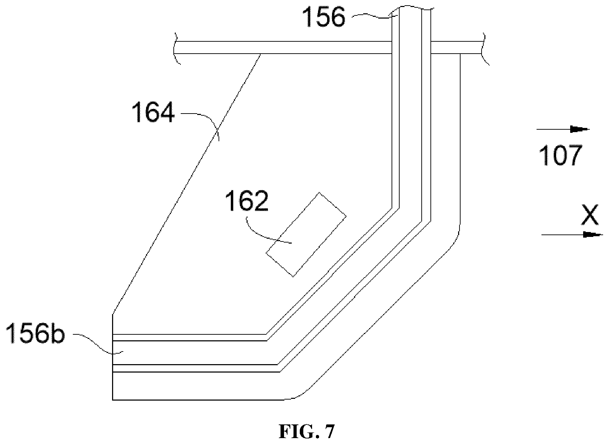

La Fig. 5 montre un exemple de réalisation du système d'évacuation 150 et les Figs. 6 et 7 montrent des coupes dudit système d'évacuation 150. Le système d'évacuation 150 est disposé ici au niveau de l'aile 104 voisinage du dispositif consommateur 106, ici le système de propulsion 106 qui est alimenté par la canalisation de transport 112a.

Le système d'évacuation 150 comporte une première canalisation 152 qui présente une extrémité proximale 152a, une extrémité distale 152b et un coude 154 entre l'extrémité proximale 152a et l'extrémité distale 152b, où le coude 154 constitue un point bas pour la première canalisation 152, c'est-à-dire qu'entre l'extrémité proximale 152a et le coude 154, d'une part, et entre l'extrémité distale 152b et le coude 154, d'autre part, la première canalisation 152 présente des pentes descendantes.

La première canalisation 152 est fluidiquement connectée à la deuxième extrémité 632 du caniveau 202, ici du caniveau inférieur 523 dudit caniveau 202, par son extrémité proximale 152a et débouche à l'extérieur de l'aéronef 100 au niveau d'une paroi extérieure de l'aéronef 100, ici de l'aile 104, par son extrémité distale 152b. Une paroi extérieure de l'aéronef 100 est en contact direct avec l'air extérieur entourant l'aéronef 100. Par exemple, l'extrémité distale 152b de la première canalisation 152 débouche sur l'extrados de l'aile 104 de l'aéronef 100. En vol, une dépression se crée au niveau de l'extrados de l'aile 104, et comme la première canalisation 152 est connectée fluidiquement par son extrémité distale 152b, à l'extrados de l'aile 104, il y a une aspiration de l'air extérieur entourant l'aéronef 100 dans la première canalisation 152, ce qui maximise le débit d'air dans ladite première canalisation 152.

La première canalisation 152 assure l'évacuation de l'air et du dihydrogène en cas de fuite de la canalisation de transport 112a dans le caniveau 202 en assurant une évacuation sur toute la longueur dudit caniveau 202. La première partie de la première canalisation 152, entre son extrémité proximale 152a et le coude 154, assure également l'évacuation de l'eau du caniveau 202. En effet, le coude 154 correspond à un point bas de la première canalisation 152, c'est au niveau du coude 154 que l'eau se sépare, par gravité, de l'air et du dihydrogène.

Le système d'évacuation 150 comporte une deuxième canalisation 156 qui présente une extrémité proximale 156a et une extrémité distale 156b, où la deuxième canalisation 156 est fluidiquement connectée au coude 154 par son extrémité proximale 156a et débouche à l'extérieur de l'aéronef 100 au niveau d'une paroi extérieure de l'aéronef 100, ici du dispositif consommateur 106, par son extrémité distale 156b.

Entre l'extrémité proximale 156a de la deuxième canalisation 156 et l'extrémité distale 156b de la deuxième canalisation 156, la deuxième canalisation 156 présente une pente descendante pour assurer l'écoulement de l'eau ou de tout autre liquide vers l'extérieur et assurant ainsi le drainage sur toute la longueur dudit caniveau 202.

Pour améliorer l'aspiration de l'air ou du dihydrogène au niveau de l'extrémité distale 152b de la première canalisation 152, le système d'évacuation 150 comporte un capot 160 qui s'étend à l'extérieur de l'aéronef 100 autour de l'extrémité distale 152b en présentant une face fermée orientée vers l'avant de l'aéronef 100 et une face ouverte orientée vers l'arrière de l'aéronef 100. Les gaz présents dans la première canalisation 152 sont alors aspirés par l'air extérieur du fait de la vitesse de déplacement de l'aéronef 100. Le capot 160 est fixé à la paroi extérieure de l'aéronef 100.

Pour éviter que l'eau présente dans la deuxième canalisation 156 gèle, le système d'évacuation 150 comporte un élément chauffant 162, par exemple une résistance électrique alimentée électriquement, qui est disposé près de ladite deuxième canalisation 156.

Ici l'élément chauffant 162 est disposé dans un aileron 164 dans lequel est enfermée la deuxième canalisation 156.

Pour tirer parti de l'aspiration de l'air extérieur, l'extrémité distale 156b de la deuxième canalisation 156 est orientée vers l'arrière de l'aéronef 100.

## Revendications

1. Aéronef (100) comportant :
- au moins une canalisation de transport (112a-b) dans laquelle s'écoule du dihydrogène, entre, en amont un réservoir (110) et en aval un dispositif consommateur (106),
- pour chaque canalisation de transport (112a-b), un canal d'enfouissement (200) comportant un caniveau (202) dans lequel est fixée la canalisation de transport (112a-b) et présentant une première extrémité (630) par laquelle la canalisation de transport (112a-b) provenant de l'amont pénètre dans le caniveau (202) et une deuxième extrémité (632) par laquelle la canalisation de transport (112a-b) allant vers l'aval sort du caniveau (202), et
- pour chaque deuxième extrémité (632), un système d'évacuation (150) fluidiquement connecté entre la deuxième extrémité (632) du caniveau (202) et l'extérieur de l'aéronef (100), le système d'évacuation (150) comportant:
- une première canalisation (152) avec une extrémité proximale (152a), une extrémité distale (152b) et un coude (154) entre ladite extrémité proximale (152a) et ladite extrémité distale (152b), le coude (154) constituant un point bas pour la première canalisation (152), et la première canalisation (152) étant fluidiquement connectée à la deuxième extrémité (632) du caniveau (202) par ladite extrémité proximale (152a) et débouchant à l'extérieur au niveau d'une paroi extérieure de l'aéronef (100) par ladite extrémité distale (152b), et
- une deuxième canalisation (156) avec une extrémité proximale (156a) et une extrémité distale (156b), la deuxième canalisation (156) étant fluidiquement connectée au coude (154) par ladite extrémité proximale (156a) et débouchant à l'extérieur de l'aéronef (100) au niveau d'une paroi extérieure de l'aéronef (100) par ladite extrémité distale (156b), et entre l'extrémité proximale (156a) de la deuxième canalisation (156) et l'extrémité distale (156b) de la deuxième canalisation (156), la deuxième canalisation (156) présentant une pente descendante.

2. Aéronef (100) selon la revendication 1, **caractérisé en ce qu'**il comporte une aile (104) et **en ce que** l'extrémité distale (152b) de la première canalisation (152) débouche sur l'extrados de l'aile (104).

3. Aéronef (100) selon l'une des revendications 1 ou 2, **caractérisé en ce que** le système d'évacuation (150) comporte un capot (160) qui s'étend à l'extérieur de l'aéronef (100) autour de l'extrémité distale (152b) en présentant une face fermée orientée vers l'avant de l'aéronef (100) et une face ouverte orientée vers l'arrière de l'aéronef (100).

4. Aéronef (100) selon l'une des revendications 1 à 3, **caractérisé en ce que** le système d'évacuation (150) comporte un élément chauffant (162) disposé près de ladite deuxième canalisation (156).

5. Aéronef (100) selon l'une des revendications 1 ou 4, **caractérisé en ce que** l'extrémité distale (156b) de la deuxième canalisation (156) est orientée vers l'arrière de l'aéronef (100).

## Patentansprüche

1. Luftfahrzeug (100) umfassend:
- mindestens eine Transportleitung (112a-b), in der Dihydrogen fließt, zwischen einem stromaufwärtigen Behälter (110) und einer stromabwärtigen Verbrauchervorrichtung (106),
- für jede Transportleitung (112a-b) einen Einbettungskanal (200) mit einer Rinne (202), in der die Transportleitung (112a-b) befestigt ist und die ein erstes Ende (630), durch das die von stromaufwärts kommende Transportleitung (112a-b) in die Rinne (202) eintritt, und ein zweites Ende (632), durch das die nach stromabwärts verlaufende Transportleitung (112a-b) aus der Rinne (202) austritt, aufweist, und
- für jedes zweite Ende (632) ein Ableitungssystem (150), das fluidisch zwischen das zweite Ende (632) der Rinne (202) und das Äußere des Luftfahrzeugs (100) geschaltet ist,
wobei das Ableitungssystem (150) Folgendes umfasst:
- eine erste Rohrleitung (152) mit einem proximalen Ende (152a), einem distalen Ende (152b) und einer Krümmung (154) zwischen dem proximalen Ende (152a) und dem distalen Ende (152b), wobei die Krümmung (154) einen Tiefpunkt für die erste Rohrleitung (152) bildet und die erste Rohrleitung (152) über das proximale Ende (152a) fluidisch mit dem zweiten Ende (632) der Rinne (202) verbunden ist und über das distale Ende (152b) an einer Außenwand des Luftfahrzeugs (100) nach außen mündet, und
- eine zweite Rohrleitung (156) mit einem proximalen Ende (156a) und einem distalen Ende (156b), wobei die zweite Rohrleitung (156) über das proximale Ende (156a) fluidisch mit der Krümmung (154) verbunden ist und über das distale Ende (156b) an einer Außenwand des Luftfahrzeugs (100) nach außerhalb des Luftfahrzeugs (100) mündet, und wobei die zweite Rohrleitung (156) zwischen dem proximalen Ende (156a) der zweiten Rohrleitung (156) und dem distalen Ende (156b) der zweiten Rohrleitung (156) ein absteigendes Gefälle aufweist.

2. Luftfahrzeug (100) nach Anspruch 1, **dadurch gekennzeichnet, dass** es einen Flügel (104) aufweist und dass das distale Ende (152b) der ersten Rohrleitung (152) auf der Oberseite des Flügels (104) mündet.

3. Luftfahrzeug (100) nach einem der Ansprüche 1 oder 2, **dadurch gekennzeichnet, dass** das Ableitungssystem (150) eine Haube (160) umfasst, die sich außerhalb des Luftfahrzeugs (100) um das distale Ende (152b) herum erstreckt und dabei eine zur Vorderseite des Luftfahrzeugs (100) ausgerichtete geschlossene Seite und eine zur Rückseite des Luftfahrzeugs (100) ausgerichtete offene Seite aufweist.

4. Luftfahrzeug (100) nach einem der Ansprüche 1 bis 3, **dadurch gekennzeichnet, dass** das Ableitungssystem (150) ein Heizelement (162) aufweist, das in der Nähe der zweiten Rohrleitung (156) angeordnet ist.

5. Luftfahrzeug (100) nach einem der Ansprüche 1 oder 4, **dadurch gekennzeichnet, dass** das distale Ende (156b) der zweiten Rohrleitung (156) zur Rückseite des Luftfahrzeugs (100) hin ausgerichtet ist.

## Claims

1. Aircraft (100) comprising:
- at least one transport line (112a-b) in which dihydrogen flows, between, upstream a tank (110) and downstream a consumer device (106),
- for each transport line (112a-b), a burial channel (200) comprising a gutter (202) in which the transport line (112a-b) is fixed and having a first end (630) by which the transport line (112a-b) coming from upstream enters into the gutter (202) and a second end (632) by which the transport line (112a-b) going downstream leaves the gutter (202), and
- for each second end (632), an evacuation system (150) fluidically connected between the second end (632) of the gutter (202) and the outside of the aircraft (100), the evacuation system (150) comprising:
- a first line (152) with a proximal end (152a), a distal end (152b) and a bend (154) between said proximal end (152a) and said distal end (152b), the bend (154) constituting a low point for the first line (152), and the first line (152) being fluidically connected to the second end (632) of the gutter (202) by said proximal end (152a) and emerging outside at an outer wall of the aircraft (100) by said distal end (152b), and
- a second line (156) with a proximal end (156a) and a distal end (156b), the second line (156) being fluidically connected to the bend (154) by said proximal end (156a) and emerging outside the aircraft (100) at an outer wall of the aircraft (100) by said distal end (156b), and, between the proximal end (156a) of the second line (156) and the distal end (156b) of the second line (156), the second line (156) having a downward slope.

2. Aircraft (100) according to Claim 1, **characterized in that** it comprises a wing (104) and **in that** the distal end (152b) of the first line (152) emerges on the upper surface of the wing (104).

3. Aircraft (100) according to one of Claims 1 or 2, **characterized in that** the evacuation system (150) comprises a cap (160) which extends outside of the aircraft (100) around the distal end (152b) by having a closed face oriented towards the front of the aircraft (100) and an open face oriented towards the rear of the aircraft (100).

4. Aircraft (100) according to one of Claims 1 to 3, **characterized in that** the evacuation system (150) comprises a heating element (162) disposed close to said second line (156).

5. Aircraft (100) according to one of Claims 1 or 4, **characterized in that** the distal end (156b) of the second line (156) is oriented towards the rear of the aircraft (100).
